# DEMANDE DE BREVET EUROPEEN

(11) **EP 1 884 865 A1**
(43) Date de publication de la demande: **06.02.2008**
(21) Numéro de dépôt: 07290954.2
(22) Date de dépôt: 31.07.2007
(51) Int. Cl.: G06F 1/16, H01H 23/30

(54) **Clavier, et appareil vidéo compact ainsi équipé doté d'un écran**

(30) Priorité: 31.07.2006 FR 0607004
(71) Demandeur: Archos, 91430 Igny (FR)
(72) Inventeur: Crohas, Henri, 91370 Verrieres le Buisson (FR); Mazingue, Laurent, 75017 Paris (FR)
(74) Mandataire: Pontet, Bernard

(57) **Abrégé**

Le lecteur vidéo de poche comprend un écran 1 et un clavier 2.

Le clavier 2 est composé de touches basculantes commandant chacune deux fonctions antinomiques qui ne peuvent être activées simultanément. Trois des touches (4c, 4d, 4e) adjacentes constituent un navigateur à touches basculantes. La touche centrale (4d) commande deux directions opposées et les deux touches latérales (4c, 4e) commandent chacune l'une respective des deux autres directions.

Utilisation pour augmenter la taille de l'écran, réduire la taille du clavier, faciliter et fiabiliser l'actionnement des fonctions.

## Description

La présente invention concerne un clavier pour appareil doté d'un écran, en particulier pour lecteur vidéo portatif compact du type appareil de poche ou pour sac à main, agenda électronique, etc.

La présente invention concerne également un tel appareil à écran, équipé du clavier.

Les appareils vidéo compacts comportent des touches de type bouton poussoir pour la commande de leurs différentes fonctions. L'utilisateur presse une touche pour activer une fonction correspondante. Une touche du type croix de navigation permet à l'utilisateur d'évoluer dans les quatre directions à travers un menu présenté à l'écran.

Les boutons-poussoirs doivent avoir une certaine taille et un certain espacement entre eux pour éviter les doubles actionnements indésirables. Même si un tel espacement est respecté, il n'est pas exclu qu'un utilisateur actionne simultanément deux fonctions contradictoires.

La croix de navigation est elle aussi consommatrice de place car elle nécessite trois rangées de détecteurs d'actionnement tels que des contacts, à savoir une rangée pour deux directions de navigation opposées, et une rangée à un seul détecteur pour chacune des deux autres directions de navigation.

Or, la place prise par les touches de commande oblige à réduire la taille de l'écran, alors que l'utilisateur souhaite que l'écran soit le plus grand possible pour un encombrement donné, nécessairement limité, de l'appareil vidéo portatif.

Le but de l'invention est ainsi de proposer un clavier ayant un encombrement réduit et permettant par conséquent d'agrandir l'écran pour un encombrement total donné de l'appareil.

Un autre but de la présente invention est de proposer un appareil vidéo, spécialement un lecteur vidéo portatif de poche, ayant une surface d'écran particulièrement grande relativement à son encombrement total.

Encore un autre but de la présente invention est de proposer un clavier qui réduise ou supprime le risque d'actionnement simultané de deux fonctions contradictoires.

Encore un autre but de l'invention est de réaliser un clavier plus économique que ceux de l'état de la technique.

Suivant l'invention, le clavier pour appareil vidéo, en particulier lecteur vidéo portatif, est caractérisé en ce qu'il comprend au moins une touche de commande présentant de part et d'autre d'une zone inactive située au-dessus d'un soutien mécanique de la touche, deux zones opposées d'actionnement par pression destinées à l'activation de deux fonctions différentes.

On réalise ainsi avec une seule touche un moyen de commande pour deux fonctions différentes. La zone inactive sert de discriminant entre ces deux fonctions en empêchant l'utilisateur d'avoir une action qui résulterait en un actionnement simultané des deux fonctions différentes. Même si l'utilisateur presse toute la surface de la touche, l'effet obtenu sera de n'activer qu'une seule des deux fonctions, ou aucune des deux.

Grâce à cette sécurité procurée par la zone inactive de la touche, les deux zones actives pour l'actionnement peuvent être plus proches l'une de l'autre que deux boutons poussoirs indépendants connus de l'état de la technique.

On réalise ainsi selon l'invention, avec un nombre réduit de touches relativement petites, un clavier économique et compact permettant d'agrandir l'écran de l'appareil vidéo qu'il équipe.

De préférence, les deux fonctions différentes pouvant être activées par la même touche sont antinomiques. Il peut s'agir de deux fonctions de navigation dans deux directions opposées, d'une fonction acquiescement et d'une fonction refus, etc.

Dans certaines circonstances, il est prévu selon l'invention d'associer d'autres fonctions aux touches que celles qui leur sont affectées en priorité. Généralement les fonctions associées en priorité sont indiquées par des icônes marqués directement, en relief ou non, sur les touches. Dans certaines circonstances telles que la saisie d'un numéro de téléphone ou la saisie de chaînes de caractères, il prévu selon l'invention de déroger aux associations de fonctions prioritaires. Dans cet exemple non limitatif, compte tenu du faible nombre de touches disponibles pour sélectionner 10, 12, 26, 36 caractères ou plus, on associe plusieurs caractères à une même touche. Pour chaque touche concernée, la saisie est séquentielle par des appuis successifs jusqu'à atteindre le caractère souhaité. Dans un mode de réalisation simple, dès que le caractère affiché dans la zone de saisie en cours correspond au caractère souhaité, ce choix doit être validé de manière explicite par un appui sur la touche d'acquiescement. La validation du caractère fait passer à la saisie du caractère suivant. Un deuxième appui sur la touche de confirmation termine la session de saisie. On améliorera sensiblement l'efficacité de la saisie en gérant le temps entre chaque appui sur une même touche et en détectant les changements de touche pour valider implicitement les caractères sélectionnés par exemple selon les méthodes connues de l'état de l'art en téléphonie. On utilise les moyens d'affichage de l'appareil pour offrir une représentation graphique de tout ou partie du clavier incluant les éléments d'information indicatifs de la fonction associée à chaque touche. Avantageusement, l'affichage des touches concernées du clavier et de leur signification est positionné en bordure de l'écran, le plus près possible du clavier, en regard direct des touches et si possible avec identité des caractéristiques dimensionnelles et/ou esthétiques entre les touches et leur représentation. Compte tenu du caractère potentiellement dynamique de l'affichage, on adaptera avantageusement les affectations de fonctions au contexte applicatif. Par exemple lorsqu'il s'agit de saisir un numéro de téléphone, il est inutile d'afficher les caractères alphabétiques. Les dix chiffres et les quelques symboles supplémentaires tels que étoile et dièse, peuvent être répartis sur l'ensemble des ressources disponibles pour minimiser le nombre des appuis séquentiels. De même, s'il s'agit de saisir le nom d'un contact, il est inutile de proposer les dix chiffres.

Les touches agissent de préférence sur des détecteurs d'actionnement placés sous les zones d'actionnement. Les touches peuvent être du type sensiblement sans mouvement, les détecteurs étant par exemple du type piézoélectrique, piézo-résistif ou capacitif, disposés de part et d'autre d'un appui rigide pour la touche en dessous de la zone inactive.

Les détecteurs d'actionnement peuvent également être des contacts à l'état de l'art, avec retour de sensation tactile ou non actionnés par basculement de la touche dans un sens ou dans l'autre autour d'un axe voisin de la zone inactive. Il s'agit par exemple de contacts en élastomère ou de manière préférée, de contacts à dômes métalliques qui offrent l'avantage d'un retour de sensation tactile net qui améliore l'impression de qualité.

Dans un mode de réalisation, le soutien mécanique situé sous la zone inactive de la touche est réalisé sous la forme d'une articulation de la touche avec une embase qui typiquement porte les détecteurs d'actionnement.

L'assemblage de la touche avec l'embase est réalisé de préférence par simple assemblage de l'articulation, de manière encore plus préférée en enfilant une tige à travers au moins une chape portée par l'embase et au moins une chape portée par la touche.

De préférence, le clavier comprend au moins deux touches adjacentes articulées à l'embase par une tige commune. Il est avantageux que l'embase et les touches comportent des chapes qui sont traversées par la tige commune et qui sont en butée latérale mutuelle pour définir le positionnement axial des touches et le jeu entre les touches.

Suivant un perfectionnement de l'invention, le clavier comprend une interface élastomère précontrainte en compression entre l'embase et la ou les touches. Les touches peuvent être pré-assemblées entre elles par fixation sur l'interface, laquelle est alors commune aux touches adjacentes. Il peut par exemple y avoir une seule interface pour cinq touches successives.

L'interface porte de préférence des bossages d'actionnement sur sa face tournée vers l'embase. Lorsque l'utilisateur actionne une touche en pressant une zone d'actionnement de cette touche, la pression est transmise par l'interface, plus particulièrement par un bossage d'actionnement de l'interface, qui sollicite à son tour le détecteur d'actionnement porté par l'embase.

L'interface peut également porter des bossages d'appui sur sa face tournée vers l'embase, pour localier l'appui de précontrainte de la touche sur l'embase.

De préférence, l'interface élastomère est installée sous précontrainte de compression entre l'embase et les touches. L'interface sert ainsi de moyen de rappel de la touche dans une position neutre ou aucune des deux fonctions n'est activée. L'utilisateur ne peut faire sortir la touche de sa position neutre qu'en dépassant un seuil d'effort défini par la précontrainte de l'interface. En même temps, la précontrainte de l'interface supprime le jeu qui pourrait exister entre la touche et l'embase lorsque la touche est dans sa position neutre. Par conséquent, les touches ne cliquettent pas lorsqu'on manipule l'appareil et l'impression de qualité est améliorée.

Suivant un autre aspect de l'invention, le clavier comporte des moyens de repérage tactile facilitant son utilisation sans recourir à l'aide visuelle.

Par exemple, les deux zones d'actionnement d'une touche peuvent présenter des différences de forme perceptibles par le doigt de l'utilisateur. Une zone d'actionnement de la touche peut être concave et l'autre convexe, la touche ayant typiquement un profil en forme de S couché lorsqu'elle est vue en élévation.

Suivant une particularité importante relative au repérage, le clavier à plusieurs touches comporte un motif de repérage tactile commun à au moins deux touches, qui chevauche les faces accessibles à l'utilisateur respectives des deux touches. Le doigt de l'utilisateur peut ainsi suivre des trajets s'étendant sur au moins deux touches, pour trouver successivement des zones d'actionnement dans un ordre qui est logique par rapport aux fonctions commandées par ces zones d'actionnement successives.

Suivant encore un autre aspect de l'invention, celle-ci propose un navigateur original en remplacement de la croix de navigation usuelle. Ce navigateur s'étend sur trois touches à double fonction selon l'invention, à savoir une touche centrale pour commander deux fonctions de navigation dans deux directions opposées, et de part et d'autre de la touche centrale, deux touches latérales commandant chacune deux autres fonctions dont une fonction de navigation dans l'une respective des deux directions perpendiculaires aux deux directions opposées de la touche centrale. Avantageusement, la deuxième fonction commandée par chacune des deux touches latérales est une fonction de navigation accélérée dans la direction perpendiculaire associée à la même touche latérale, ou encore dans une direction dépendant du contexte d'utilisation.

Il est également très avantageux que le navigateur ainsi constitué comprenne un motif de repérage tactile, de préférence un évidement dont le contour s'étend sur les trois touches pour délimiter avec une certaine précision la région où se trouvent les quatre zones d'actionnement correspondant aux quatre directions de navigation.

L'invention concerne également un appareil portatif compact doté d'un écran, notamment un appareil vidéo, du type de poche ou pour sac à main, comprenant un clavier selon l'invention.

Suivant un perfectionnement, l'appareil est capable de présenter l'image dans deux sens opposés dans lesquels le clavier se trouve respectivement à droite et à gauche de l'écran, pour convenir à un droitier et respectivement à un gaucher.

Pour cela, une rubrique relative au choix du sens d'utilisation peut être prévue dans le menu d'installation de l'appareil vidéo. Il est également concevable que le sens d'utilisation soit détecté par un contact ou autre composant sensible à la gravité, installé dans l'appareil, pour commander automatiquement le sens de présentation de l'image.

Le clavier, ou seulement son sous-ensemble d'actionnement comportant les touches fixées sur l'interface, pourrait être aisément démontable et retournable de 180° pour avoir toujours une orientation ergonomique quel que soit le sens d'utilisation de l'appareil. Un détecteur de position du sous-ensemble peut alors d'une part commander le sens de l'image sur l'écran et d'autre part définir la table de correspondance entre les fonctions à commander d'une part et les différents détecteurs d'actionnement de l'embase du clavier d'autre part.

D'autres particularités et avantages de l'invention ressortiront encore de la description ci-après, relative à des exemples limitatifs.

Aux dessins annexés :
- la figure 1 est une vue en perspective d'un appareil vidéo de poche selon l'invention ;
- la figure 2 est une vue en perspective d'un mode de réalisation du clavier ;
- la figure 3 est une vue en perspective éclatée du clavier de la figure 2 montrant les sous-ensembles qui le composent ;
- la figure 4 est une vue en perspective partielle d'un mode de réalisation des touches ;
- la figure 5 est une vue en perspective éclatée du sous-ensemble d'actionnement ;
- la figure 6 est une vue en coupe longitudinale du clavier, dans deux plans de coupe différents ;
- la figure 7 est une vue de dessous du sous-ensemble d'actionnement, avec vue partielle de la tige et d'une chape de l'embase dans la partie gauche;
- la figure 8 est une vue en coupe transversale du clavier lors d'un actionnement ; et
- la figure 9 est une vue en bout schématique d'une variante de réalisation du clavier.

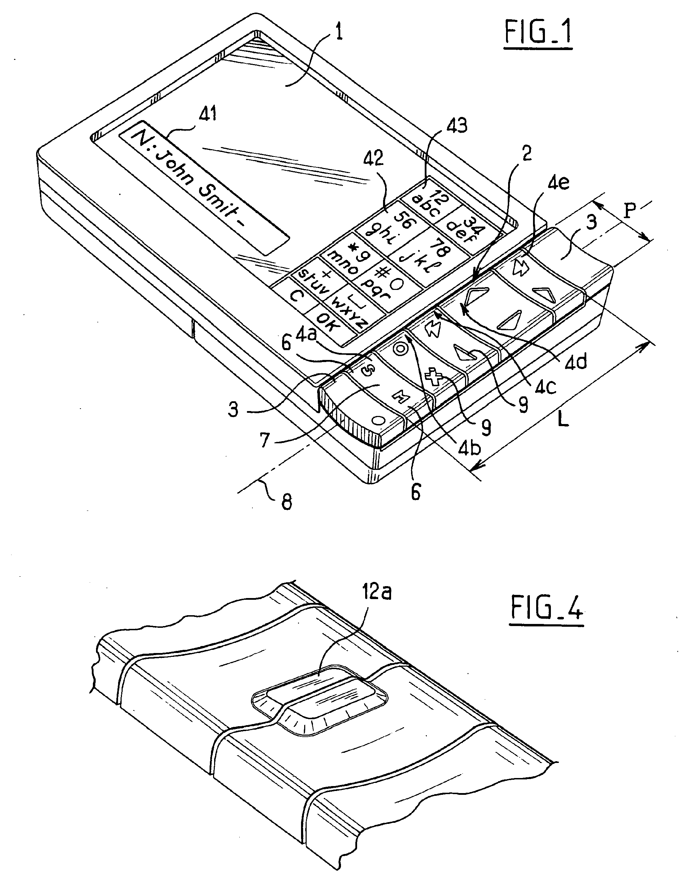

Dans l'exemple représenté à la figure 1, le lecteur vidéo de poche se présente sous la forme d'un objet parallélépipédique plat comportant un écran rectangulaire 1 occupant la majeure partie de l'une des grandes faces du parallélépipède à côté d'un clavier 2 s'étendant le long de l'une des largeurs de cette grande face, entre deux enjoliveurs d'extrémité 3. A titre indicatif, les dimensions du lecteur sont par exemple de 13 x 7 x 1 cm environ.

La longueur L du clavier est par exemple d'environ 50 mm et sa profondeur P d'environ 15 mm.

Le clavier comprend des touches 4a...4e alignées parallèlement à sa longueur L. Dans l'exemple, les touches sont au nombre de cinq.

Conformément à l'invention, chaque touche 4 présente deux zones d'actionnement opposées 6 situées de part et d'autre d'une zone inactive 7 de la touche. Les zones inactives 7 sont alignées au-dessus d'un axe longitudinal 8 du clavier. L'axe longitudinal 8 est parallèle à la longueur L du clavier. Pour chaque touche, les deux zones d'actionnement 6 sont situées de part et d'autre de l'axe 8. Chaque zone d'actionnement permet d'activer une fonction correspondante du lecteur, symbolisée par un icône 9. Pour activer la fonction, l'utilisateur presse avec le doigt sur la zone d'actionnement 6 correspondante.

Dans l'exemple qui va être décrit plus en détail, les touches 4 sont basculantes indépendamment les unes des autres autour de l'axe longitudinal 8 dans un sens de basculement ou dans l'autre à partir d'une position neutre dans laquelle aucune des deux fonctions associées à la touche n'est activée.

La touche est soutenue mécaniquement sous la zone inactive 7. En conséquence, l'appui du doigt de l'utilisateur a en général pour effet que la touche est majoritairement pressée d'un côté de l'axe 8 et tend à se soulever du côté de la zone d'actionnement opposée à celle subissant la pression majoritaire. Si par maladresse l'utilisateur appuie d'une manière centrée sur la zone inactive 7 avec éventuellement et part et d'autre de celle-ci une pression égale sur les deux zones d'actionnement, aucun actionnement ne se produit car la pression est entièrement absorbée par le soutien mécanique présent sous la zone inactive 7.

De préférence, les deux fonctions associées à une même touche sont antinomiques, en ce sens que leur actionnement simultané est indésirable. Dans l'exemple représenté, les deux fonctions activables par la touche 4a sont la fonction « Menu » et la fonction « Sortir du menu ». La touche 4b commande les fonctions « Approbation » et « Refus ». Les appareils du genre visé par l'invention comportent idéalement un petit nombre de touches, et un nombre de fonctions de plus en plus grand est demandé par l'utilisateur moyen. Ceci peut être obtenu en donnant une fonction différente à une deuxième, une troisième etc. pression successive sur une même zone d'actionnement. Des informations affichées sur l'écran peuvent également affecter momentanément une fonction différente à une zone d'actionnement déterminée. Dans de tels cas, la notion d'antinomie entre les fonctions associées aux deux zones d'actionnement d'une même touche peut être momentanément abandonnée sans sortir du cadre de la particularité d'antinomie prévue selon l'invention.

Suivant un aspect de l'invention, un navigateur est regroupé sur trois touches adjacentes, à savoir les touches 4c, 4d, et 4e du clavier. Les deux zones d'actionnement de la touche centrale 4d commandent deux directions de navigation opposées. Les deux touches latérales 4c et 4e commandent chacune l'une respective des deux directions de navigation perpendiculaires aux deux directions opposées de la touche 4d. L'autre zone d'actionnement de chaque touche latérale 4c ou 4e commande un défilement à vitesse accélérée.

Dans l'exemple représenté, les deux zones d'actionnement pour le défilement accéléré sont alignées parallèlement à l'axe longitudinal 8, de sorte que les quatre fonctions de défilement à la vitesse normale présentent une configuration en T. Il serait également possible de disposer ces quatre fonctions selon une configuration en Z, c'est-à-dire par exemple en intervertissant les deux fonctions activables par la touche 4e ou celles activables par la touche 4c.

La figure 1 illustre en outre une particularité de l'invention qui est de pouvoir à tout moment, selon les besoins fonctionnels de l'appareil, réaffecter tout ou partie des touches à d'autres fonctions que celles représentées par les icônes 9 marquées sur les touches. Dans l'exemple représenté, toutes les touches disponibles sont réaffectées aux fonctions liées à la saisie de caractères alphanumériques 41. Cette réaffectation repose sur l'affichage d'une représentation 42 du nouveau clavier ainsi constitué sur l'écran 1. Dans cet exemple, les caractères 43 ont été répartis de manière uniforme sur la représentation du plus grand nombre possible de touches pour réduire le nombre d'appuis séquentiels maximum nécessaires pour atteindre tous les caractères. Il est possible de faire d'autres choix d'affectation sans sortir du cadre de l'invention, par exemple en privilégiant l'accès aux caractères dont l'usage est le plus fréquent. De même, dans l'exemple non limitatif représenté figure 1, les fonctions d'acquiescement et d'annulation sont réaffectées à d'autres touches 4a que celles normalement prévues à cet effet 4b pour regrouper les touches impliquées dans la saisie de caractères 4b, 4c, 4d, 4e.

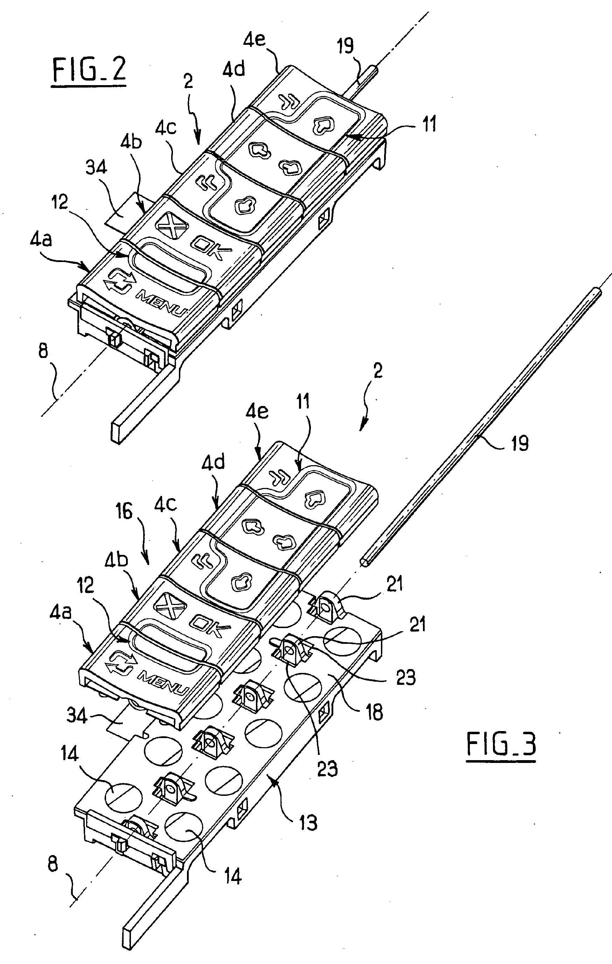

Dans un mode de réalisation plus particulier représenté aux figures 2 et 3, le clavier comporte des motifs de repérage tactile sur la face visible des touches, c'est-à-dire la face accessible au doigt de l'utilisateur et qui présente les zones d'actionnement et la zone inactive. Dans l'exemple des figures 2 et 3, ces motifs sont des évidements qui s'étendent sur les faces de plusieurs touches adjacentes. Ces motifs de repérage tactile permettent à l'utilisateur, après une période d'accoutumance, de se guider au toucher pour repérer sur le clavier la zone d'actionnement correspondant à la fonction qu'il désire activer. En outre, les motifs 11, 12 guident l'utilisateur d'une zone d'actionnement à une autre.

Les motifs de repérage ont encore pour fonction de définir un regroupement visuel et tactile de certaines touches adjacentes, et donc un regroupement logique des fonctions activables par ces touches.

Dans l'exemple plus précis qui est représenté, le motif 11 regroupe de manière visuelle et tactile les trois touches 4c, 4d et 4e du navigateur. Le contour de l'évidement 11 entoure et regroupe les quatre zones d'actionnement pour le défilement à vitesse normale dans les quatre directions. Ainsi, l'utilisateur habitué à son lecteur peut sélectionner les directions de défilement en déplaçant son doigt à l'intérieur de l'évidement 11, qui présente une forme générale de T comme la disposition, déjà décrite, des quatre zones d'actionnement correspondantes. Les deux zones d'actionnement pour le défilement accéléré se trouvent en dehors de l'évidement 11. L'utilisateur les repère au toucher en franchissant de l'intérieur vers l'extérieur le contour de l'évidement 11 de part et d'autre de la jambe du T.

Le motif 12 est également, dans cet exemple, un évidement dont le doigt de l'utilisateur doit faire le tour pour rencontrer successivement les quatre surfaces d'actionnement des deux touches 4a et 4b. L'évidement 12 chevauche la limite entre les touches 4a et 4b, en étant symétrique de part et d'autre de l'axe 8 et sans atteindre les bords de l'ensemble formé par les touches 4a et 4b.

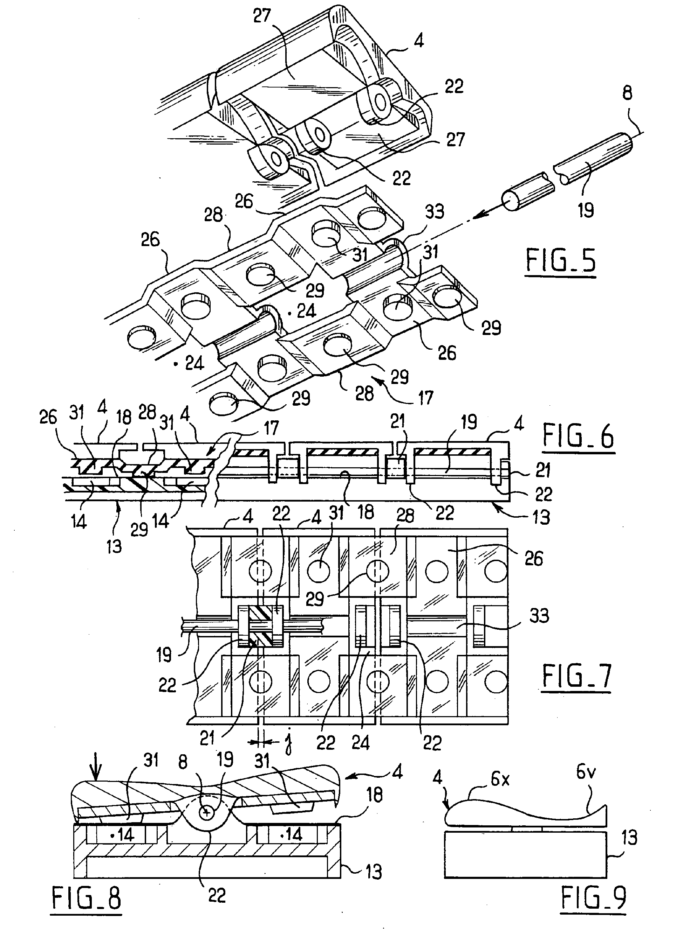

Dans la variante de réalisation représentée à la figure 4, le motif 12 des figures 2 et 3 est remplacé par un motif 12a constitué par un bossage ayant sensiblement même contour que l'évidement 12 des figures 2 et 3.

On va maintenant décrire en référence aux figures 2, 3, 5, 6, 7, 8, la constitution mécanique du clavier des figures 2 et 3. Le clavier comprend une embase 13 dans laquelle sont installées deux rangées de détecteurs d'actionnement 14 constitués dans cet exemple par des micro-contacts de type connu. Les deux rangées 14 sont disposées parallèlement à l'axe longitudinal 8. Le clavier 2 comprend encore un sous-ensemble d'actionnement 16 comprenant les touches 4a à 4e déjà décrites, pré-assemblées entre elles au moyen d'une interface élastomère 17 (figure 5) qui une fois le clavier assemblé est interposée entre les touches 4a à 4e d'une part et une face supérieure 18 de l'embase 13 d'autre part.

Enfin, le clavier 2 comprend une tige cylindrique 19 de longueur supérieure ou sensiblement égale à L (figure 1) pour relier de manière articulée les touches 4a à 4e à l'embase 13.

Pour permettre ce raccordement, l'embase 13 présente sur sa face supérieure 18 six chapes 21 alignées selon l'axe 8 et formant paliers pour la tige cylindrique 19. En outre, chaque touche 4 (figure 5) présente sur sa face inférieure deux chapes 22 destinées à se placer entre deux chapes successives 21 de l'embase 13, sensiblement sans jeu axial entre celles-ci, comme représenté à la figure 6. La figure 6 et la partie gauche de la figure 7 montrent également que chaque chape 21 se place sensiblement sans jeu axial entre deux chapes 22 successives appartenant à deux touches 4 adjacentes pour définir ainsi entre ces deux touches un jeu « j » (Figure 7) très faible, de par exemple quelques dixièmes de mm, pour permettre aux touches 4 d'être actionnées indépendamment les unes des autres de manière fiable. Les paliers 21 forment donc entretoise entre les touches 4.

L'axe longitudinal 8, autour duquel les touches 4 peuvent basculer par rapport à l'embase 13, s'étend au voisinage du plan de la surface supérieure 18 de l'embase 13, où se trouvent les faces sensibles des détecteurs d'actionnement 14. Ainsi, les faces sensibles des détecteurs 14 sont attaquées quasi perpendiculairement par chaque touche. Il est cependant préféré que l'axe 8 soit légèrement décalé vers les touches 4 par rapport à la surface 18 pour que le mouvement de la face supérieure des touches 4 soit sensiblement perpendiculaire à la face extérieure voisine de l'appareil, de façon à minimiser les jeux fonctionnels à prévoir entre les bords de touche et les parties fixes voisines. Pour le positionnement de la tige 19 près de la face supérieure 18 celle-ci présente de part et d'autre des chapes 21 des évidements ou ouvertures 23 (figure 3) permettant aux chapes 22 des touches de pénétrer légèrement à l'intérieur de l'embase 13 lorsque l'assemblage est réalisé. Cette pénétration visible aux figures 6 et 8 a aussi pour effet de pré-positionner les chapes 22 en alignement axial avec les chapes 21 pendant l'assemblage, en vue de l'insertion de la tige 19.

En pratique, la surface 18 de l'embase 13 est matérialisée par une membrane élastomère qui recouvre complètement les micro-contacts 14 tout en leur transmettant les forces d'actionnement reçues de la part des touches 4. La partie gauche de la figure 6 et la figure 8 illustrent que le corps de l'embase soutient la membrane dans certaines régions appropriées situées entre les détecteurs 14 ou autour de ceux-ci.

L'interface 17 est une plaque présentant des ouvertures 24 (figure 5) pour le passage des chapes 22, des zones 26 de fixation par collage sur des faces inférieures correspondantes 27 des touches 4, des ponts 28 qui sont libres relativement aux touches 4 et relient entre elles les zones successives 26 collées à des touches 4 adjacentes. Les ponts 28 sont surbaissés vers l'embase 13 par rapport aux zones de collage 26 et comportent des bossages 29 qui s'appuient de manière permanente sur la surface 18 de l'embase 13 entre les contacts 14 successifs d'une même rangée. Ainsi, l'interface 17 établit entre l'embase 13 et les touches 4 une précontrainte grâce à laquelle l'interface est pré-comprimée entre l'embase 13 et les touches 4, et les touches 4 sont sollicitées à l'écart de l'embase 13. Le jeu de la tige 19 dans les chapes 21 et 22 est ainsi supprimé. La précontrainte précitée rappelle les touches 4 dans leur position neutre dans laquelle aucune des deux fonctions associées à chaque touche 4 n'est activée. Lorsqu'une touche 4 est actionnée dans un sens ou dans l'autre par rapport à cette position neutre, comme représenté à la figure 8, ceci correspond à une compression locale supplémentaire de l'interface 17 avec déformation des deux ponts 28 situés de part et d'autre de la zone 26 collée à la touche 4 du côté où celle-ci est pressée par l'utilisateur.

Du côté tourné vers l'embase 13, les zones 26 de fixation à la touche 4 portent chacune un bossage d'actionnement 31. Comme représenté dans la partie gauche de la figure 6, lorsque les touches 4 sont au repos, les bossages 31 sont écartés des contacts 14. Quand une touche 4 est actionnée (figure 8), le bossage 31 correspondant vient solliciter la face sensible du micro-contact 14 associé.

Ainsi, chaque zone 26 de fixation à une touche 4 est en même temps une zone de transmission d'actionnement de la touche 4 à un micro-contact 14 déterminé, par l'intermédiaire d'un bossage 31 porté par cette zone. Les deux zones 26 associées à une même touche 4 sont reliées par une patte 33 en forme de canal ouvert vers l'embase 13. Le creux de ce canal reçoit la tige 19.

Pour l'assemblage du clavier, on fabrique séparément d'une part l'embase 13, et d'autre part le sous-ensemble d'actionnement en collant les touches sur l'interface 17. Puis on aligne les chapes 21 et 22, on enfile la tige 19 et on l'immobilise axialement grâce à un des enjoliveurs 3 (figure 1).

Les figures 2 et 3 montrent le ruban multifilaire 34 par lequel les micro-contacts 14 sont raccordables à l'électronique du lecteur (non représentée).

Dans la variante de réalisation représentée à la figure 9, la touche 4 présente un profil dissymétrique avec une face d'actionnement concave 6v et face d'actionnement convexe 6x, pour faciliter le repérage tactile par l'utilisateur.

Bien entendu, l'invention n'est pas limitée aux exemples décrits et représentés.

Un appareil selon l'invention pourrait présenter deux claviers au lieu d'un seul, le navigateur étant par exemple un clavier distinct. Un appareil selon l'invention pourrait également présenter des touches classiques à surface d'actionnement unique en plus d'un clavier selon l'invention.

Le clavier selon l'invention pourrait être placé sur une face correspondant à l'épaisseur du lecteur, ou sur une face en biseau par rapport à la face portant l'écran.

L'embase ou autre structure sous-jacente peut comporter moins de chapes telles que 21, certaines d'entre elles pouvant avantageusement être remplacées par des entretoises qui maintiennent le jeu fonctionnel désiré entre les touches adjacentes.

Les chapes 21 ou 22 peuvent être conformées en paliers ouverts qui s'encliquètent sur la tige telle que 19.

Les touches peuvent être fixées sur l'interface par un moyen autre que collage, par exemple un encliquetage.

Le jeu « j » entre touches pourrait être assuré par un collet prolongeant le flanc de la touche à proximité de l'axe de rotation, ou encore par le positionnement des touches sur l'interface.

## Revendications

1. - Clavier pour appareil doté d'un écran, en particulier lecteur vidéo portatif, **caractérisé en ce qu'**il comprend au moins une touche de commande (4) présentant de part et d'autre d'une zone inactive (7) située au-dessus d'un soutien mécanique de la touche, deux zones opposées (6) d'actionnement par pression, pour la commande de deux fonctions différentes.

2. - Clavier selon la revendication 1, **caractérisé en ce que** les deux fonctions différentes sont antinomiques.

3. - Clavier selon la revendication 1 ou 2, **caractérisé en ce qu'**au moins l'une des deux fonctions différentes est indiquée à l'écran (1) par une représentation graphique (42) de l'au moins une touche correspondante (4).

4. - Clavier selon l'une des revendications 1 à 3, **caractérisé en ce que** les deux zones d'actionnement (6x, 6v) présentent des différences de forme perceptibles par le doigt de l'utilisateur.

5. - Clavier selon l'une des revendications 1 à 4, **caractérisé en ce que** le clavier comprend une embase (13) comportant des détecteurs d'actionnement (14), en particulier des contacts, associés chacun à l'une des zones d'actionnement (6) de la touche (4).

6. - Clavier selon la revendication 5, **caractérisé en ce que** le soutien mécanique de la zone inactive de la touche est assuré relativement à l'embase (13).

7. - Clavier selon l'une des revendications 1 à 4, **caractérisé en ce que** le soutien mécanique est réalisé sous la forme d'une articulation de la touche (4) avec une embase (13).

8. - Clavier selon la revendication 7, **caractérisé en ce que** l'articulation comprend une tige (19) traversant au moins une chape (22) portée par la touche (4) et au moins une chape (21) portée par l'embase (13).

9. - Clavier selon la revendication 7, **caractérisé en ce que** l'au moins une touche comprend au moins deux touches (4a ... 4e) adjacentes articulées à l'embase (13) par une tige (19) commune aux deux touches.

10. - Clavier selon la revendication 9, **caractérisé en ce que** l'embase (13) et les touches (4, 4a ... 4e) comportent des chapes (21, 22) qui sont traversées par la tige commune (19) et qui sont en butée latérale mutuelle pour définir le jeu axial (j) entre touches.

11. - Clavier selon l'une des revendications 8 à 10, **caractérisé en ce que** l'au moins une touche (4) est assemblée avec l'embase (13) par simple mise en place de la tige (19).

12. - Clavier selon l'une des revendications 5 à 11, **caractérisé en ce qu'**il comprend une interface élastomère (17) précontrainte en compression entre l'au moins une touche (4) et l'embase (13).

13. - Clavier selon l'une des revendications 1 à 11, **caractérisé en ce que** l'au moins une touche comprend au moins deux touches pré-assemblées entre elles par fixation sur une interface (17) commune aux deux touches.

14. - Clavier selon la revendication 12 ou 13, **caractérisé en ce que** l'interface (17) porte des bossages d'actionnement (31) sur sa face opposée aux touches (4).

15. - Clavier selon l'une des revendications 12 à 14, **caractérisé en ce que** l'interface (17) porte des bossages d'appui localisé (29) sur sa face opposée aux touches (4), les, bossages d'appui localisé (29) étant destinés à porter de manière permanente sur une surface (18) sous-jacente.

16. - Clavier selon l'une des revendications 1 à 15, **caractérisé en ce que** l'au moins une touche comprend au moins deux touches adjacentes, et **en ce qu'**il comporte un motif de repérage tactile (11, 12, 12a) commun aux deux touches, qui chevauche les deux touches sur leur face respective accessible à l'utilisateur.

17. - Clavier selon l'une des revendications 1 à 15, **caractérisé en ce que** l'au moins une touche comprend au moins trois touches adjacentes (4c, 4d, 4e), à savoir une touche centrale (4d) pour commander deux fonctions de navigation dans deux directions opposées, et deux touches latérales (4c, 4e) commandant chacune deux autres fonctions dont une fonction de navigation dans l'une respective des deux directions perpendiculaires aux deux directions opposées de la touche centrale.

18. - Clavier selon la revendication 17, **caractérisé en ce que** la deuxième fonction commandée par chacune des deux touches latérales (4c, 4e) est une fonction de navigation accélérée.

19. - Clavier selon la revendication 17 ou 18, **caractérisé en ce qu'**il comprend un motif de repérage tactile (11), de préférence un évidement, avec un contour s'étendant sur les trois touches 14c, d, e).

20. **-** Clavier selon l'une des revendications 1 à 19, **caractérisé en ce que** le soutien mécanique tel qu'un axe d'articulation se trouve à proximité d'un plan contenant des faces sensibles des détecteurs d'actionnement (14), de préférence avec un décalage de l'axe en direction des touches.

21. - Appareil portatif compact à écran (1), du type de poche ou pour sac à main, comprenant un clavier (2) selon l'une des revendications 1 à 20.

22. - Appareil selon la revendication 21, **caractérisé en ce qu'**il est capable de présenter l'image dans deux sens opposés dans lesquels le clavier se trouve respectivement à droite et à gauche de l'écran.

23. - Appareil selon la revendication 22, **caractérisé en ce que** les touches du clavier peuvent être inversées sur l'embase par un moyen de montage rapide, en fonction du sens d'utilisation de l'écran.
